# EUROPEAN PATENT APPLICATION

(11) **EP 4 801 155 A1**
(43) Date of publication of application: **02.09.2026**
(21) Application number: 24890667.9
(22) Date of filing: 12.11.2024
(51) Int. Cl.: H04W 72/0453

(54) **COMMUNICATION METHOD AND APPARATUS**

(30) Priority: 17.11.2023 CN 202311545882
(71) Applicant: Huawei Technologies Co., Ltd., Shenzhen, Guangdong 518129 (CN)
(72) Inventor: HOU, Hailong, Shenzhen, Guangdong 518129 (CN); GUO, Zhiheng, Shenzhen, Guangdong 518129 (CN); LU, Shaozhong, Shenzhen, Guangdong 518129 (CN); SONG, Xinghua, Shenzhen, Guangdong 518129 (CN); LI, Xianghua, Shenzhen, Guangdong 518129 (CN); ZHANG, Guanxi, Shenzhen, Guangdong 518129 (CN); CHEN, Dageng, Shenzhen, Guangdong 518129 (CN)
(74) Representative: Isarpatent
(86) International application number: PCT/CN2024/131583
(87) International publication number: WO 2025/103312

(57) **Abstract**

This application provides a communication method and apparatus, relating to the field of wireless communication technologies. The method includes: A network device sends first configuration information, where the first configuration information indicates a first downlink carrier, a first uplink carrier, and a second uplink carrier. The first downlink carrier is for downlink data transmission, and the first uplink carrier and the second uplink carrier are for uplink data transmission. The first downlink carrier and the first uplink carrier are respectively for downlink data transmission and uplink data transmission in TDD mode. The first downlink carrier, the first uplink carrier, and the second uplink carrier are located within a first band. Based on the first configuration information, the network device performs data transmission with a terminal device by using at least one of the first downlink carrier, the first uplink carrier, and the second uplink carrier.

## Description

### CROSS-REFERENCE TO RELATED APPLICATIONS

This application claims priority to Chinese Patent Application No. 202311545882.5, filed with the China National Intellectual Property Administration on November 17, 2023 and entitled "COMMUNICATION METHOD AND APPARATUS", which is incorporated herein by reference in its entirety.

### TECHNICAL FIELD

This application relates to the field of wireless communication technologies, and in particular, to a communication method and apparatus.

### BACKGROUND

Currently, new radio (new radio, NR) supports time division duplex (time division duplex, TDD) and frequency division duplex (frequency division duplex, FDD). In a TDD system, a large proportion of downlink slots restricts uplink performance indicators such as coverage, delay, and capacity.

Therefore, how to perform resource configuration to improve uplink coverage is currently a problem that needs to be resolved.

### SUMMARY

Embodiments of this application provide a communication method and apparatus, to improve uplink coverage.

According to a first aspect, a communication method is provided, where the method is applied to a network device, and the method includes the following steps: sending first configuration information, where the first configuration information indicates a first downlink carrier, a first uplink carrier, and a second uplink carrier, the first downlink carrier is for downlink data transmission, the first uplink carrier and the second uplink carrier are for uplink data transmission, the first downlink carrier and the first uplink carrier are respectively for downlink data transmission and uplink data transmission in TDD mode, and the first downlink carrier, the first uplink carrier, and the second uplink carrier are located within a first band; and performing data transmission with a terminal device by using at least one of the first downlink carrier, the first uplink carrier, and the second uplink carrier based on the first configuration information.

In the foregoing implementation, the first downlink carrier, the first uplink carrier, and the second uplink carrier are configured within the first band, and the first downlink carrier and the first uplink carrier are used in TDD mode. Compared with a current TDD system, in embodiments of this application, because an uplink carrier may be configured on both a first frequency domain resource and a second frequency domain resource within the first band, uplink coverage may be improved, an uplink transmission delay may be reduced, and an uplink capacity may be increased.

Optionally, the first downlink carrier and the second uplink carrier are respectively for downlink data transmission and uplink data transmission in FDD mode.

In the foregoing implementation, the first downlink carrier, the first uplink carrier, and the second uplink carrier are configured within the first band. On a basis of using the first downlink carrier and the first uplink carrier in TDD mode, the first downlink carrier and the second uplink carrier are further used in FDD mode, so that the first band has both the TDD and FDD modes. On the one hand, compared with the current TDD system, because the uplink carrier may be configured on both the first frequency domain resource and the second frequency domain resource within the first band in embodiments of this application, the uplink coverage may be improved, the uplink transmission delay may be reduced, and the uplink capacity may be increased. On the other hand, because the first downlink carrier and the first uplink carrier may be configured on the first frequency domain resource within the first band in embodiments of this application, downlink data transmission and uplink data transmission are supported on the first frequency domain resource, that is, uplink and downlink transmission may be performed in TDD mode at a same frequency. Compared with an FDD system, reciprocity between an uplink channel and a downlink channel may be improved, and downlink transmission performance may be improved.

In a possible implementation, the first band includes a first frequency domain resource and a second frequency domain resource, the first frequency domain resource is for uplink transmission and downlink transmission in TDD mode, the second frequency domain resource is only for uplink transmission, the first downlink carrier and the first uplink carrier are located within the first frequency domain resource, and the second uplink carrier is located within the second frequency domain resource.

Optionally, the first frequency domain resource and the second frequency domain resource are predefined.

Optionally, the first frequency domain resource is contiguous or non-contiguous, and the second frequency domain resource is contiguous or non-contiguous.

In a possible implementation, the first frequency domain resource and the second frequency domain resource are non-contiguous.

In a possible implementation, a first guard band exists between the first downlink carrier and the second uplink carrier, and the first guard band is not for data transmission; or a first guard band exists between the first downlink carrier and the second uplink carrier, a second guard band exists between the first uplink carrier and the second uplink carrier, and the first guard band and the second guard band are not for data transmission.

In the foregoing implementation, the guard band is disposed, so that mutual interference between data transmission on the first frequency domain resource and data transmission on the second frequency domain resource can be reduced.

In a possible implementation, the performing data transmission with a terminal device by using at least one of the first downlink carrier, the first uplink carrier, and the second uplink carrier based on the first configuration information includes: sending data to the terminal device on the first downlink carrier within a first time unit; or receiving, on the second uplink carrier within the first time unit, data sent by the terminal device; or within the first time unit, sending data to the terminal device on the first downlink carrier, while receiving, on the second uplink carrier, data sent by the terminal device.

In a possible implementation, the performing data transmission with a terminal device by using at least one of the first downlink carrier, the first uplink carrier, and the second uplink carrier based on the first configuration information includes: receiving, on the first uplink carrier within a second time unit, data sent by the terminal device; or receiving, on the second uplink carrier within the second time unit, data sent by the terminal device; or receiving, on both the first uplink carrier and the second uplink carrier within the second time unit, data sent by the terminal device.

In a possible implementation, the method further includes: sending TDD uplink and downlink configuration information, where the TDD uplink and downlink configuration information indicates time unit formats of a plurality of time units within a period of time, the time unit formats include a first time unit format and a second time unit format, the first time unit format supports both downlink data transmission and uplink data transmission, and the second time unit format supports only uplink data transmission. A format of the first time unit is the first time unit format, and a format of the second time unit is the second time unit format.

In a possible implementation, the method further includes: sending indication information, where the indication information indicates the terminal device to send data on the first uplink carrier within the second time unit, or to send data on the second uplink carrier within the second time unit, or to send data on both the first uplink carrier and the second uplink carrier within the second time unit.

In a possible implementation, the method further includes: receiving capability information from the terminal device, where the capability information includes first terminal capability information and/or second terminal capability information, the first terminal capability information indicates that the terminal device supports receiving data on the first downlink carrier while sending data on the second uplink carrier, or indicates that the terminal device does not support receiving data on the first downlink carrier while sending data on the second uplink carrier, and the second terminal capability information indicates that the terminal device supports sending data on both the first uplink carrier and the second uplink carrier, or indicates that the terminal device does not support sending data on both the first uplink carrier and the second uplink carrier; and the performing data transmission with a terminal device by using at least one of the first downlink carrier, the first uplink carrier, and the second uplink carrier based on the first configuration information includes: performing data transmission with the terminal device by using at least one of the first downlink carrier, the first uplink carrier, and the second uplink carrier based on the first configuration information and the capability information of the terminal device.

In a possible implementation, the first configuration information is sent in one or more of the following signaling: a system message, a radio resource control (RRC) message, a media access control control element (MAC CE), and downlink control information (DCI).

According to a second aspect, a communication method is provided, where the method is applied to a terminal device, and the method may include the following steps: receiving first configuration information, where the first configuration information indicates a first downlink carrier, a first uplink carrier, and a second uplink carrier, the first downlink carrier is for downlink data transmission, the first uplink carrier and the second uplink carrier are for uplink data transmission, the first downlink carrier and the first uplink carrier are respectively for downlink data transmission and uplink data transmission in TDD mode, and the first downlink carrier, the first uplink carrier, and the second uplink carrier are located within a first band; and performing data transmission with a network device by using at least one of the first downlink carrier, the first uplink carrier, and the second uplink carrier based on the first configuration information.

In a possible implementation, the first band includes a first frequency domain resource and a second frequency domain resource, the first frequency domain resource is for uplink transmission and downlink transmission in TDD mode, the second frequency domain resource is only for uplink transmission, the first downlink carrier and the first uplink carrier are located within the first frequency domain resource, and the second uplink carrier is located within the second frequency domain resource.

In a possible implementation, the first frequency domain resource and the second frequency domain resource are non-contiguous.

In a possible implementation, a first guard band exists between the first downlink carrier and the second uplink carrier, and the first guard band is not for data transmission; or a first guard band exists between the first downlink carrier and the second uplink carrier, a second guard band exists between the first uplink carrier and the second uplink carrier, and the first guard band and the second guard band are not for data transmission.

In a possible implementation, the performing data transmission with a network device by using at least one of the first downlink carrier, the first uplink carrier, and the second uplink carrier based on the first configuration information includes: receiving, on the first downlink carrier within a first time unit, data sent by the network device; or sending data to the network device on the second uplink carrier within the first time unit; or within the first time unit, receiving, on the first downlink carrier, data sent by the network device, while sending data to the network device on the second uplink carrier.

In a possible implementation, the performing data transmission with a network device by using at least one of the first downlink carrier, the first uplink carrier, and the second uplink carrier based on the first configuration information includes: sending data to the network device on the first uplink carrier within a second time unit; or sending data to the network device on the second uplink carrier within the second time unit; or sending data to the network device on both the first uplink carrier and the second uplink carrier within the second time unit.

In a possible implementation, the method further includes: receiving TDD uplink and downlink configuration information, where the TDD uplink and downlink configuration information indicates time unit formats of a plurality of time units within a period of time, the time unit formats include a first time unit format and a second time unit format, the first time unit format supports both downlink data transmission and uplink data transmission, and the second time unit format supports only uplink data transmission. A format of the first time unit is the first time unit format, and a format of the second time unit is the second time unit format.

In a possible implementation, the method further includes: receiving indication information from the network device, where the indication information indicates the terminal device to send data on the first uplink carrier within the second time unit, or to send data on the second uplink carrier within the second time unit, or to send data on both the first uplink carrier and the second uplink carrier within the second time unit.

In a possible implementation, the method further includes: sending capability information of the terminal device to the network device, where the capability information includes first terminal capability information and/or second terminal capability information, the first terminal capability information indicates that the terminal device supports receiving data on the first downlink carrier while sending data on the second uplink carrier, or indicates that the terminal device does not support receiving data on the first downlink carrier while sending data on the second uplink carrier, and the second terminal capability information indicates that the terminal device supports sending data on both the first uplink carrier and the second uplink carrier, or indicates that the terminal device does not support sending data on both the first uplink carrier and the second uplink carrier.

In a possible implementation, the first configuration information is received in one or more of the following signaling: a system message, an RRC message, a MAC CE, and DCI.

According to a third aspect, a communication system is provided, including a network device and a terminal device, where the network device implements the method according to any one of the implementations in the first aspect, and the terminal device implements the method according to any one of the implementations in the second aspect.

According to a fourth aspect, a communication apparatus is provided, including a unit or a module configured to perform the method according to any one of the implementations in the first aspect, or including a unit or a module configured to perform the method according to any one of the implementations in the second aspect.

According to a fifth aspect, a communication apparatus is provided, including: one or more processors configured to perform the method according to any one of the implementations in the first aspect or the method according to any one of the implementations in the second aspect.

According to a sixth aspect, a readable storage medium is provided. The readable storage medium stores a program. When the program is executed by a communication apparatus, the method according to any one of the implementations in the first aspect is implemented, or the method according to any one of the implementations in the second aspect is implemented.

According to a seventh aspect, a chip system is provided, including: a memory, configured to store a computer program; and a processor, where after the processor invokes the computer program from the memory and runs the computer program, a communication apparatus installed with the chip system is caused to perform the method according to any one of the implementations in the first aspect or the method according to any one of the implementations in the second aspect.

According to an eighth aspect, a computer program product is provided, where when the computer program product is invoked by a computer, the computer is caused to perform the method according to any one of the implementations in the first aspect or the method according to any one of the implementations in the second aspect.

### BRIEF DESCRIPTION OF DRAWINGS

FIG. 1a and FIG. 1b are diagrams of frame structures of TDD and FDD in the conventional technology;
FIG. 2 is a diagram of a time proportion of downlink transmission to uplink transmission in a TDD system in the conventional technology;
FIG. 3 is a diagram of a system architecture applicable to an embodiment of this application;
FIG. 4 is a schematic flowchart of a communication method according to an embodiment of this application;
FIG. 5 is a diagram of a configuration of a downlink carrier and an uplink carrier within a band according to an embodiment of this application;
FIG. 6 is a diagram of a carrier configuration provided with a guard band according to an embodiment of this application;
FIG. 7 is a diagram of another carrier configuration provided with a guard band according to an embodiment of this application;
FIG. 8 is a diagram of another configuration of a downlink carrier and an uplink carrier within a band according to an embodiment of this application;
FIG. 9 is a diagram of another carrier configuration provided with a guard band according to an embodiment of this application;
FIG. 10 is a diagram of a spectrum and carrier configuration of two operators according to an embodiment of this application;
FIG. 11 is a diagram of another spectrum and carrier configuration of two operators according to an embodiment of this application;
FIG. 12 is a diagram of a carrier configuration of three operators according to an embodiment of this application;
FIG. 13 is a diagram of another carrier configuration of three operators according to an embodiment of this application;
FIG. 14 is a diagram of a structure of a network device according to an embodiment of this application;
FIG. 15 is a diagram of a structure of a communication apparatus according to an embodiment of this application; and
FIG. 16 is a diagram of a structure of a communication apparatus according to another embodiment of this application.

### DESCRIPTION OF EMBODIMENTS

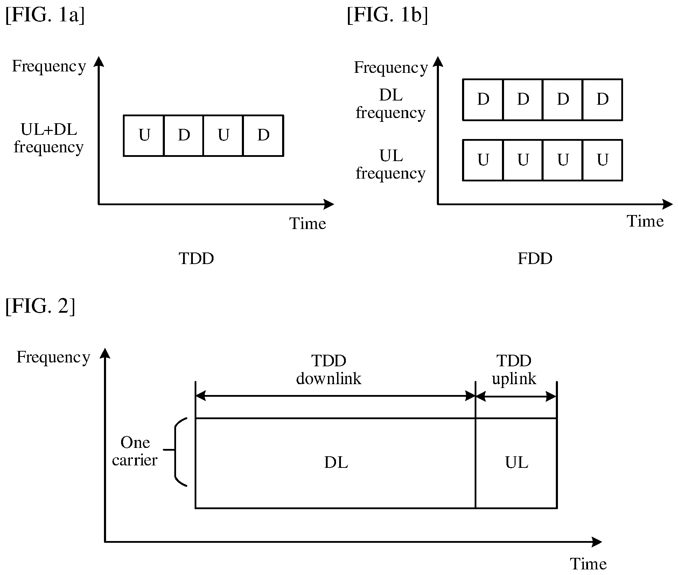

Currently, TDD and FDD exist in NR. FIG. 1a and FIG. 1b show examples of a TDD frame structure and an FDD frame structure. As shown in FIG. 1a, in the TDD frame structure, uplink transmission and downlink transmission use a same frequency but are separated in time. As shown in FIG. 1b, in the FDD frame structure, uplink transmission and downlink transmission use different frequencies. Correspondingly, a spectrum supporting a TDD operation (TDD operation) is referred to as a TDD spectrum, and a spectrum supporting an FDD operation (FDD operation) is referred to as an FDD spectrum. For a carrier, because the TDD spectrum only has a contiguous bandwidth range for uplink transmission and downlink transmission, the TDD spectrum is sometimes referred to as an unpaired spectrum (unpaired spectrum). Because the FDD spectrum has a pair of non-contiguous bandwidths for uplink transmission and downlink transmission respectively, the FDD spectrum is sometimes referred to as a paired spectrum (paired spectrum).

As shown in FIG. 2, a TDD system is usually downlink-oriented, where downlink slots occupy a majority of a frame structure of the TDD system. This restricts uplink performance indicators such as coverage, a delay, and a capacity. In an FDD system, an uplink bandwidth and a downlink bandwidth are symmetrically allocated at a fixed ratio, and uplink transmission and downlink transmission are performed on different frequencies. This results in relatively low reciprocity between an uplink channel and a downlink channel.

Therefore, embodiments of this application provide a communication method and an apparatus that can implement the method, to improve uplink coverage. On this basis, in some other embodiments of this application, reciprocity between an uplink channel and a downlink channel may be further improved while improving uplink coverage.

The following describes embodiments of this application in detail with reference to the accompanying drawings.

Embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD), a universal mobile telecommunications system (universal mobile telecommunications system, UMTS), a worldwide interoperability for microwave access (worldwide interoperability for microwave access, WiMAX) communication system, and a fifth-generation (fifth-generation, 5G) system or new radio (new radio, NR), or applied to a future communication system or another similar communication system.

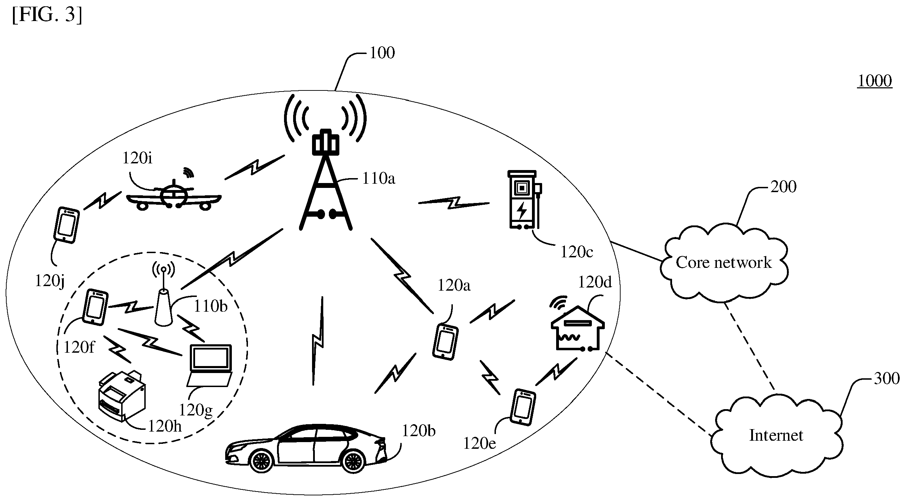

FIG. 3 is a diagram of an architecture of a communication system 1000 applied to an embodiment of this application. As shown in FIG. 3, the communication system includes a radio access network 100 and a core network 200. Optionally, the communication system 1000 may further include an internet 300. The radio access network 100 may include at least one radio access network device (such as 110a and 110b in FIG. 3), and may further include at least one terminal device (such as 120a to 120j in FIG. 3). The terminal device is connected to the radio access network device in a wireless manner, and the radio access network device is connected to the core network in a wireless or wired manner. The core network device and the radio access network device may be independent and different physical devices, or functions of the core network device and logical functions of the radio access network device may be integrated onto a same physical device, or some of the functions of the core network device and some of the functions of the radio access network device may be integrated onto one physical device. The terminal devices and the radio access network devices may be connected to each other in a wired or wireless manner. FIG. 3 is only a diagram. The communication system may further include another network device, for example, may alternatively include a wireless relay device and a wireless backhaul device, which are not shown in FIG. 3.

The radio access network device may be a base station (base station), an evolved NodeB (evolved NodeB, eNodeB), a transmission reception point (transmission reception point, TRP), a next-generation NodeB (next-generation NodeB, gNB) in a fifth-generation (fifth-generation, 5G) mobile communication system, a next-generation base station in a sixth-generation (sixth-generation, 6G) mobile communication system, a base station in a future mobile communication system, an access node in a Wi-Fi system, or the like; or may be a module or a unit that completes some functions of a base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. For detailed descriptions of the foregoing protocol layers, refer to relevant technical specifications of the third generation partnership project (3rd generation partnership project, 3GPP). The radio access network device may be a macro base station (such as 110a in FIG. 3), or may be a micro base station or an indoor station (such as 110b in FIG. 3), or may be a relay node, a donor node, or the like. A specific technology and a specific device form that are used by the radio access network device are not limited in embodiments of this application. For ease of description, the following uses an example in which the network device is used as the radio access network device for description.

The terminal device may alternatively be referred to as a terminal, a user equipment (user equipment, UE), a mobile station, a mobile terminal, or the like. The terminal device may be widely used in various scenarios, for example, device-to-device (device-to-device, D2D), vehicle to everything (vehicle to everything, V2X), machine-type communication (machine-type communication, MTC), internet of things (internet of things, IOT), virtual reality, augmented reality, industrial control, autonomous driving, telemedicine, smart grid, smart furniture, smart office, smart wearable, smart transportation, and smart city. The terminal device may be a mobile phone, a tablet computer, a computer with a wireless transceiver function, a wearable device, a vehicle, an unmanned aerial vehicle, a helicopter, an airplane, a ship, a robot, a robotic arm, a smart home device, or the like. The specific technology and the specific device form used by the terminal device are not limited in embodiments of this application.

The network device and the terminal device may be at a fixed location, or may be mobile. The network device and the terminal device may be deployed on land, including indoor or outdoor, handheld or vehicle-mounted; or may be deployed on a water surface; or may be deployed on an airplane, a balloon, and an artificial satellite. Application scenarios of the network device and the terminal device are not limited in embodiments of this application.

Roles of the network device and the terminal device may be relative. For example, a helicopter or an unmanned aerial vehicle 120i in FIG. 3 may be configured as a mobile network device. For a terminal device 120j that accesses the radio access network 100 through 120i, the unmanned aerial vehicle 120i is a network device. However, for a network device 110a, 120i is a terminal device, that is, 110a and 120i perform communication through a wireless air interface protocol. Certainly, 110a and 120i may alternatively perform communication through an interface protocol between network devices. In this case, with respect to 110a, 120i is also a network device. Therefore, both the network device and the terminal device may be collectively referred to as communication apparatuses. 110a and 110b in FIG. 3 may be referred to as communication apparatuses having a network device function, and 120a to 120j in FIG. 3 may be referred to as communication apparatuses having a terminal device function.

In embodiments of this application, the network device sends a downlink signal or downlink information to the terminal device, where the downlink information is carried on a downlink channel; and the terminal device sends an uplink signal or uplink information to the base station, where the uplink information is carried on an uplink channel. To communicate with the base station, the terminal device needs to establish a wireless connection with a cell controlled by the base station. The cell that has established the wireless connection with the terminal device is referred to as a serving cell of the terminal device.

Communication may be performed through a licensed spectrum between the network device and the terminal device, between network devices, and between terminal devices, or may be performed through an unlicensed spectrum, or may be performed through both the licensed spectrum and the unlicensed spectrum; may be performed through a spectrum below 6 gigahertz (gigahertz, GHz), or may be performed through a spectrum above 6 GHz, or may be performed through both the spectrum below 6 GHz and the spectrum above 6 GHz. A spectrum resource for wireless communication is not limited in this embodiment of this application.

In this embodiment of this application, a function of the network device may alternatively be performed by a module (such as a chip) in the network device, or may be performed by a control subsystem including the function of the network device. The control subsystem that includes the function of the network device herein may be a control panel in the foregoing application scenario such as smart grid, industrial control, smart transportation, or smart city. The function of the terminal device may alternatively be performed by a module (such as a chip or a modem) in the terminal device, or may be performed by an apparatus including the function of the terminal device.

An example in which the communication method provided in embodiments of this application is performed by the network device and the terminal device is used for description. The network device in embodiments of this application may be a device, or a chip, a unit, or a module in the device. For example, the network device may be the access network device 110a or the access network device 110b in FIG. 3. The network device may alternatively be a communication apparatus having the function of the network device, or a chip, a unit, or a module inside the communication apparatus having the function of the network device. The terminal device in embodiments of this application may be a device, or a chip, a unit, or a module in the device, for example, may be any one terminal (120a to 120j) shown in FIG. 3. The terminal device may alternatively be a communication apparatus having the function of the terminal, or a chip, a unit, or a module inside the communication apparatus having the function of the terminal.

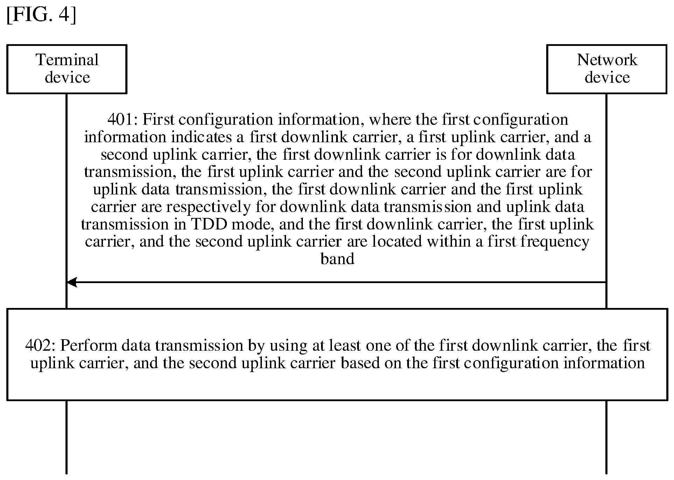

Based on the system architecture shown in FIG. 3, FIG. 4 shows a communication method according to an embodiment of this application. The solution in FIG. 4 is described by using an example in which a network device and a terminal device interact with each other for execution. For related descriptions of the network device and the terminal device, refer to the foregoing content. Details are not described again.

As shown in FIG. 4, the method may include the following steps.

Step 401: A network device sends first configuration information, and correspondingly, a terminal device receives the first configuration information.

The first configuration information indicates a first downlink carrier, a first uplink carrier, and a second uplink carrier, where the first downlink carrier is for downlink data transmission, the first uplink carrier and the second uplink carrier are for uplink data transmission, and the first downlink carrier and the first uplink carrier are respectively for downlink data transmission and uplink data transmission in TDD mode. The first downlink carrier, the first uplink carrier, and the second uplink carrier are located within a first band (band). In other words, the network device configures the first downlink carrier, the first uplink carrier, and the second uplink carrier within the first band for the terminal device based on the first configuration information.

Optionally, the first downlink carrier and the second uplink carrier are respectively for downlink data transmission and uplink data transmission in FDD mode.

In a possible implementation, the first band includes a first frequency domain resource and a second frequency domain resource, where the first frequency domain resource is for uplink transmission and downlink transmission in TDD mode, and the second frequency domain resource is only for uplink transmission. The first downlink carrier and the first uplink carrier are located within the first frequency domain resource, and the second uplink carrier is located within the second frequency domain resource. In other words, the network device configures the first downlink carrier and the first uplink carrier for the terminal device within the first frequency domain resource, configures the second uplink carrier within the second frequency domain resource, and performs, in TDD mode, downlink transmission by using the first downlink carrier and uplink transmission by using the first uplink carrier.

Optionally, the first frequency domain resource and the second frequency domain resource are predefined.

Optionally, the first frequency domain resource may be a contiguous frequency domain resource, or may be a non-contiguous frequency domain resource. Optionally, the second frequency domain resource may be a contiguous frequency domain resource, or may be a non-contiguous frequency domain resource.

The first frequency domain resource and the second frequency domain resource may be understood as two different types of spectra. The first frequency domain resource may be understood as a first-type spectrum, and the second frequency domain resource may be understood as a second-type spectrum. In other words, one band includes at least two segments of contiguous or non-contiguous spectrum, and the at least two segments of spectrum are classified into the first-type spectrum and the second-type spectrum. The first-type spectrum may be for uplink transmission and downlink transmission in TDD mode, and the second-type spectrum is entirely for uplink transmission. Different from the FDD system shown in FIG. 1b that includes the spectrum only for uplink transmission and the spectrum only for downlink transmission, the first-type spectrum in this embodiment of this application is for uplink transmission and downlink transmission in TDD mode.

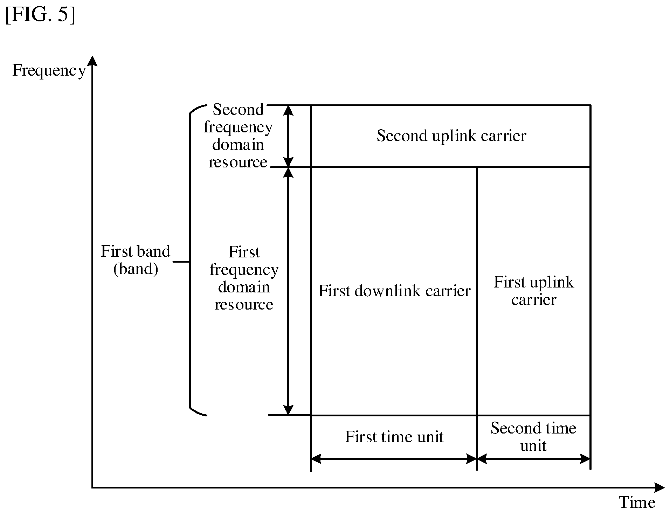

For example, FIG. 5 is a diagram of a configuration of a downlink carrier and an uplink carrier within a band according to an embodiment of this application. As shown in FIG. 5, a first band includes a first frequency domain resource and a second frequency domain resource. The first frequency domain resource is for uplink transmission and downlink transmission in TDD mode, and the second frequency domain resource is entirely for uplink transmission. A first downlink carrier and a first uplink carrier are configured on the first frequency domain resource, and a second uplink carrier is configured on the second frequency domain resource. Within a first time unit, the first downlink carrier may be for downlink transmission, and/or the second uplink carrier may be for uplink transmission. Within a second time unit, the first uplink carrier and/or the second uplink carrier may be for uplink transmission.

From a frequency domain perspective, within the first time unit, the first frequency domain resource is for downlink transmission, the second frequency domain resource is for uplink transmission, and downlink transmission and uplink transmission may be simultaneously performed. In this case, the operating mode is FDD. Within the second time unit, the first frequency domain resource and the second frequency domain resource are both for uplink transmission.

From a time domain perspective, within the first frequency domain resource, downlink transmission may be performed on the first downlink carrier within the first time unit, and uplink transmission may be performed on the first uplink carrier within the second time unit. In this case, the operating modes for the first downlink carrier and the first uplink carrier are TDD.

Optionally, the first time unit and the second time unit may be at the granularity of a slot. In other words, the first time unit and the second time unit may separately include one or more slots. It should be understood that the first time unit and the second time unit may alternatively be at the granularity of another time unit, for example, symbols or subframes. This is not limited in this application.

In a possible implementation, a guard band (guard band) may be disposed between the first frequency domain resource and the second frequency domain resource, and the guard band is not for data transmission. The guard band may be predefined, or may be configured by the network device through signaling. This is not limited in this application. Disposing the guard band reduces mutual interference between data transmission on the first frequency domain resource and data transmission on the second frequency domain resource.

In a possible implementation, a first guard band exists between the first downlink carrier and the second uplink carrier, a second guard band exists between the first uplink carrier and the second uplink carrier, and the first guard band and the second guard band are not for data transmission.

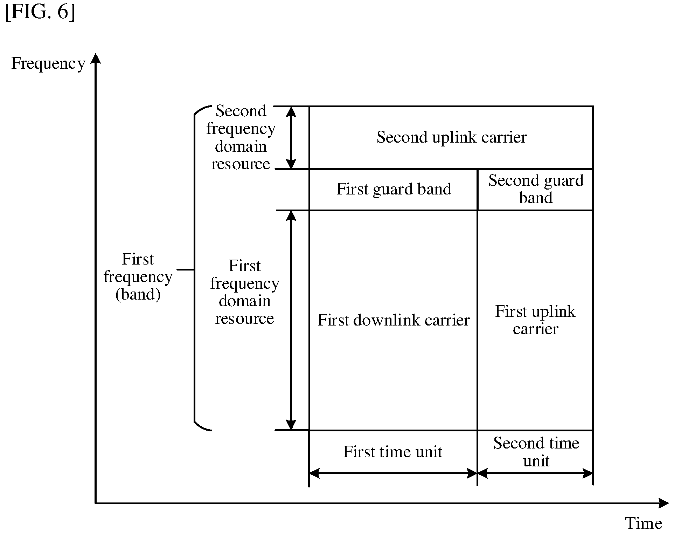

For example, FIG. 6 is a diagram of a carrier configuration with a disposed guard band according to an embodiment of this application. As shown in FIG. 6, a first guard band is disposed between a first downlink carrier and a second uplink carrier, and a second guard band is disposed between a first uplink carrier and the second uplink carrier. The first guard band may be understood as a guard band between the first downlink carrier and the second uplink carrier within a first time unit, and the second guard band may be understood as a guard band between the first uplink carrier and the second uplink carrier within a second time unit.

Optionally, the first guard band and the second guard band have a same bandwidth and a same frequency. In this case, it may be alternatively understood as that a guard band is disposed between the first frequency domain resource and the second frequency domain resource, and the guard band is a combination of the first guard band and the second guard band in FIG. 6. In other words, the guard band exists between the first frequency domain resource and the second frequency domain resource within both the first time unit and the second time unit.

In some other embodiments, the first guard band and the second guard band have different bandwidths, or the first guard band and the second guard band have different frequencies, or the first guard band and the second guard band have different bandwidths and frequencies. This is not limited in this application.

In another implementation, a first guard band exists between the first downlink carrier and the second uplink carrier, and the first guard band is not for data transmission. In this implementation, spectrum utilization may be improved.

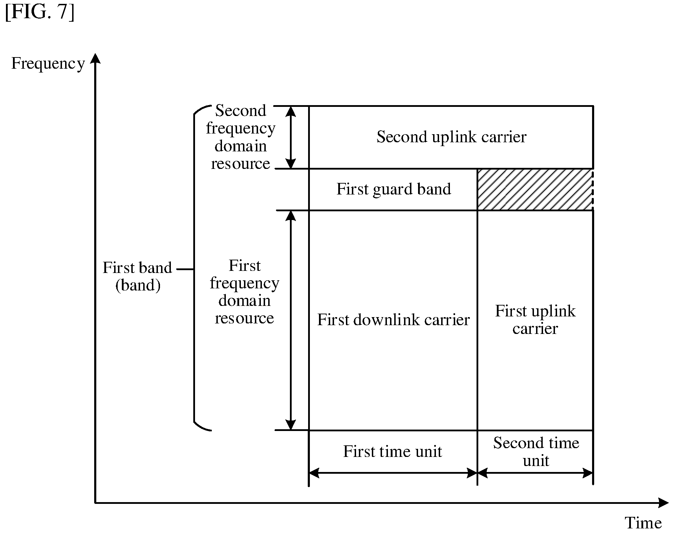

For example, FIG. 7 is a diagram of another carrier configuration with a disposed guard band according to an embodiment of this application. Compared with FIG. 6, in FIG. 7, a first guard band is disposed only between a first downlink carrier and a second uplink carrier, and a second guard band is not disposed between a first uplink carrier and the second uplink carrier. In other words, a guard band exists between the first downlink carrier and the second uplink carrier only within a first time unit.

A frequency domain resource corresponding to a part filled with diagonal lines in FIG. 7 is a frequency domain resource that has a same frequency and bandwidth as the first guard band and that is between the first uplink carrier and the second uplink carrier. The frequency domain resource corresponding to the part may be for uplink transmission.

Optionally, the frequency domain resource corresponding to the part filled with diagonal lines in FIG. 7 belongs to a resource in the first frequency domain resource, in other words, the resource corresponding to the part belongs to a resource of the first uplink carrier; or the frequency domain resource corresponding to the part filled with diagonal lines in FIG. 7 belongs to a resource in the second frequency domain resource, in other words, the resource corresponding to the part belongs to a resource of the second uplink carrier; or one part of the frequency domain resource filled with diagonal lines in FIG. 7 belongs to the first frequency domain resource, and the other part of the resource belongs to the second frequency domain resource, in other words, one part of the resource corresponding to the part belongs to a resource of the first uplink carrier, and the other part belongs to a resource of the second uplink carrier.

In a possible implementation, the first band includes the first frequency domain resource and the second frequency domain resource, where the first frequency domain resource is for uplink transmission and downlink transmission in TDD mode, and the second frequency domain resource is only for uplink transmission. The first downlink carrier is located within the first frequency domain resource, the second uplink carrier is located within the second frequency domain resource, and the first uplink carrier is located within the first frequency domain resource and the second frequency domain resource. In other words, the first uplink carrier is configured to span the first frequency domain resource and the second frequency domain resource, or the first uplink carrier is configured in both the first frequency domain resource and the second frequency domain resource.

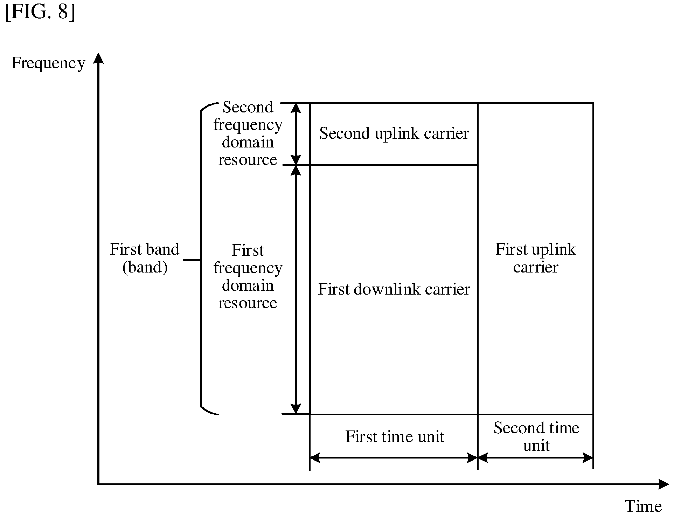

For example, FIG. 8 is a diagram of a configuration of a downlink carrier and uplink carriers within a band according to an embodiment of this application. As shown in FIG. 8, a first band includes a first frequency domain resource and a second frequency domain resource. The first frequency domain resource is for uplink transmission and downlink transmission in TDD mode, and the second frequency domain resource is entirely for uplink transmission. The first downlink carrier is configured within the first frequency domain resource, the second uplink carrier is configured within the second frequency domain resource, and the first uplink carrier is configured within the first frequency domain resource and the second frequency domain resource. Within a first time unit, the first downlink carrier may be for downlink transmission, and/or the second uplink carrier may be for uplink transmission. Within a second time unit, the first uplink carrier may be for uplink transmission.

From a frequency domain dimension, within the first time unit, the first frequency domain resource is for downlink transmission, the second frequency domain resource is for uplink transmission, and downlink transmission and uplink transmission may be simultaneously performed. In this case, an operating mode is FDD. Within the second time unit, the first frequency domain resource and the second frequency domain resource are both for uplink transmission.

From a time domain dimension, within the first frequency domain resource, downlink transmission may be performed on the first downlink carrier within the first time unit, and uplink transmission may be performed on the first uplink carrier within the second time unit. In this case, operating modes of the first downlink carrier and the first uplink carrier are TDD.

In a possible implementation, based on the carrier configuration shown in FIG. 8, a guard band exists between the first downlink carrier and the second uplink carrier, and the guard band is not for data transmission.

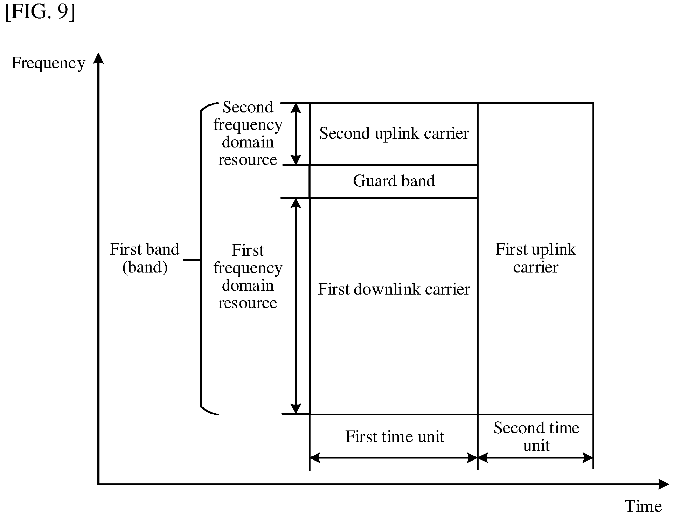

For example, FIG. 9 is a diagram of a carrier configuration with a disposed guard band according to an embodiment of this application. As shown in FIG. 9, a guard band exists between a first downlink carrier and a second uplink carrier.

In a possible implementation, the first frequency domain resource and the second frequency domain resource within the first band are contiguous. In another possible implementation, the first frequency domain resource and the second frequency domain resource within the first band are non-contiguous. This implementation may be applicable to a scenario in which the first band is allocated to a plurality of operators (operator) for use.

One band may be allocated to a plurality of operators for use. In this way, network devices of the plurality of operators often need to be deployed within the first band. To meet this requirement, in embodiments of this application, uplink carriers and downlink carriers of the plurality of operators can be flexibly deployed within the first band.

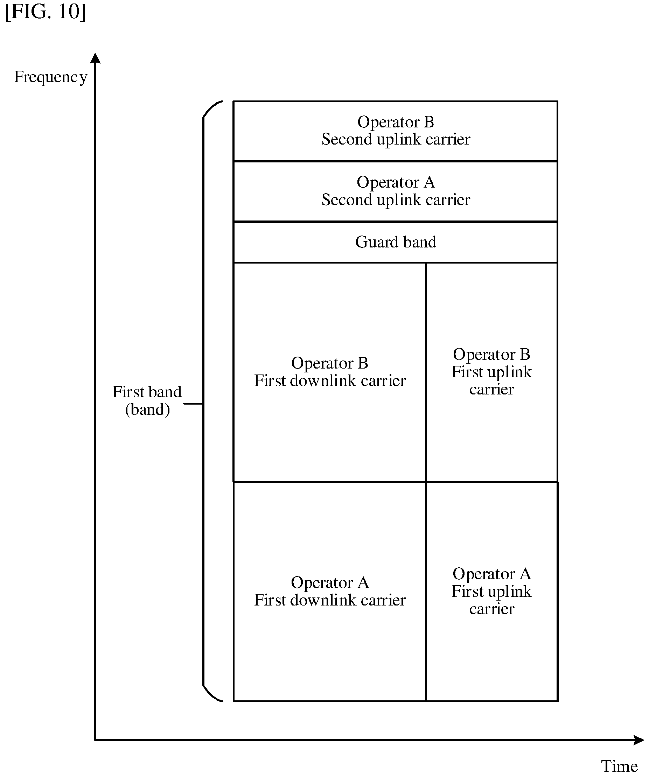

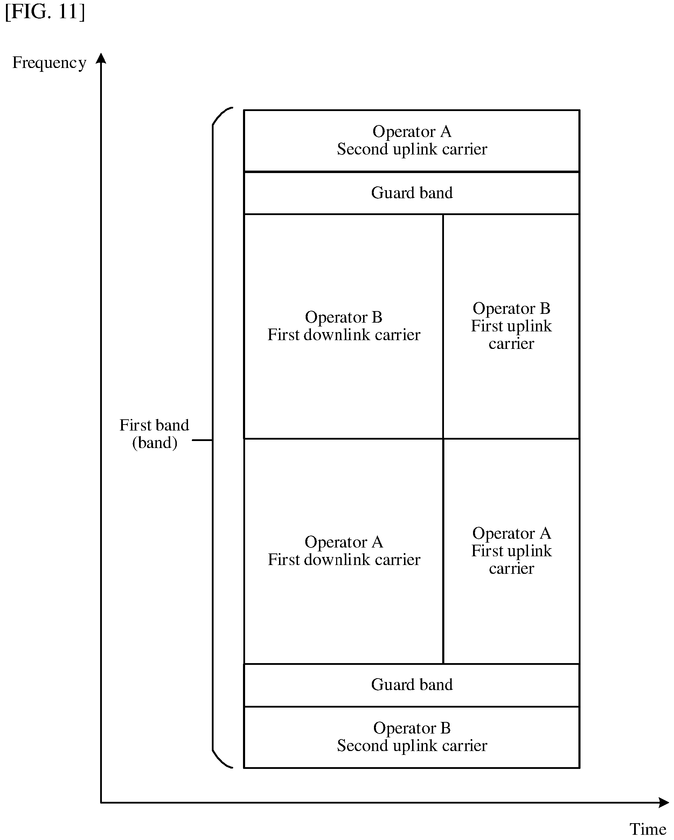

An example in which the first band is allocated to an operator A and an operator B for use is used. FIG. 10 and FIG. 11 respectively show two different spectrum and carrier configurations.

As shown in FIG. 10, a first frequency domain resource of the operator A and a first frequency domain resource of the operator B are contiguously deployed, and a second frequency domain resource of the operator A and a second frequency domain resource of the operator B are deployed on one side of the first frequency domain resource of the operator B. It may be understood that the second frequency domain resource of the operator A and the second frequency domain resource of the operator B may alternatively be deployed on one side of the first frequency domain resource of the operator A.

As shown in FIG. 11, a first frequency domain resource of an operator A and a first frequency domain resource of an operator B are contiguously deployed, a second frequency domain resource of the operator A is deployed on one side of the first frequency domain resource of the operator B, and a second frequency domain resource of the operator B is deployed on one side of the first frequency domain resource of the operator A. It may be understood that the second frequency domain resource of the operator A may alternatively be deployed on one side of the first frequency domain resource of the operator A, and the second frequency domain resource of the operator B may alternatively be deployed on one side of the first frequency domain resource of the operator B.

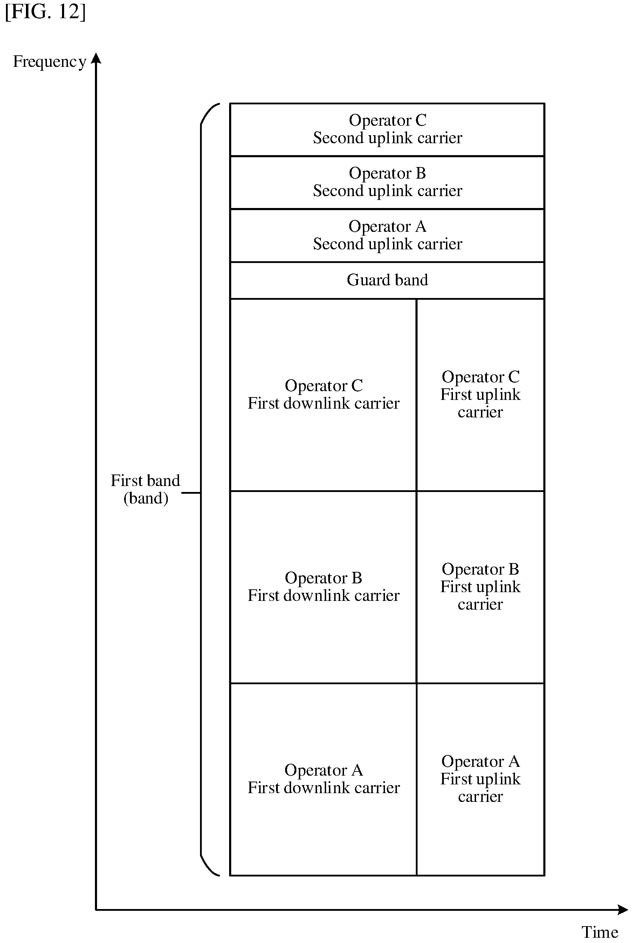

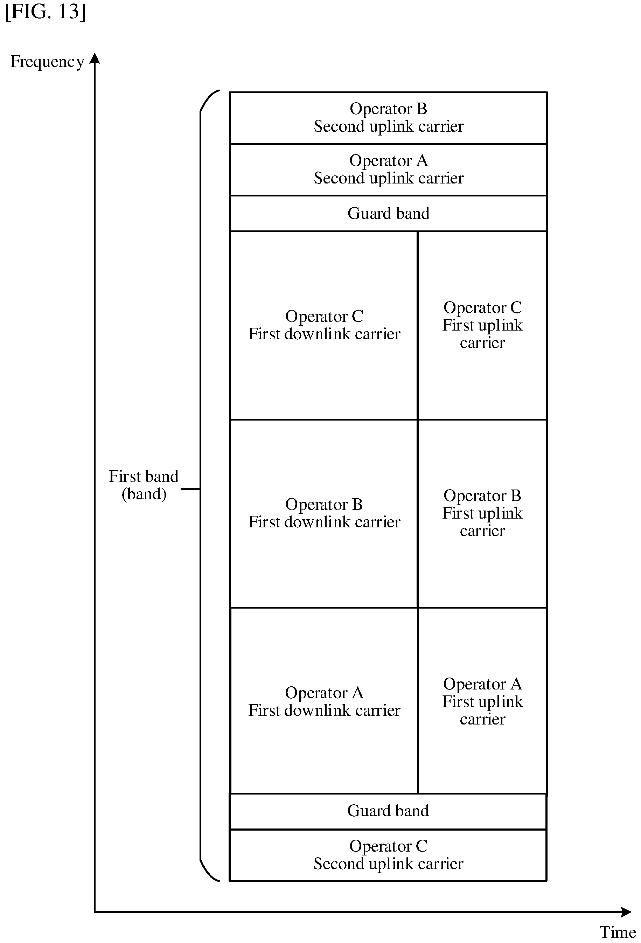

Further, an example in which the first band is allocated to the operator A, the operator B, and an operator C is used. FIG. 12 and FIG. 13 respectively show two different spectrum and carrier configurations.

As shown in FIG. 12, a first frequency domain resource of the operator A, a first frequency domain resource of the operator B, and a first frequency domain resource of the operator C are contiguously deployed, and a second frequency domain resource of the operator A, a second frequency domain resource of the operator B, and a second frequency domain resource of the operator C are deployed on one side of the first frequency domain resource of the operator C.

As shown in FIG. 13, a first frequency domain resource of the operator A, a first frequency domain resource of the operator B, and a first frequency domain resource of the operator C are contiguously deployed, a second frequency domain resource of the operator A and a second frequency domain resource of the operator B are deployed on one side of the first frequency domain resource of the operator C, and a second frequency domain resource of the operator C is deployed on one side of the first frequency domain resource of the operator A.

It should be understood that the foregoing merely shows several examples of spectrum and carrier configurations of the plurality of operators within the first band. The examples of this application constitute no limitation.

In a possible implementation, the first configuration information includes configuration information of the first downlink carrier, configuration information of the first uplink carrier, and configuration information of the second uplink carrier. Optionally, the configuration information of the first downlink carrier may include information such as a frequency start position, a bandwidth, and a subcarrier spacing (subcarrier space, SCS) of the first downlink carrier. The configuration information of the first uplink carrier may include information such as a frequency start position, a bandwidth, and a subcarrier spacing of the first uplink carrier. The configuration information of the second uplink carrier may include information such as a frequency start position, a bandwidth, and a subcarrier spacing of the second uplink carrier. Methods for configuring the first uplink carrier, the first downlink carrier, and the second uplink carrier are not limited in this application.

In a possible implementation, the network device may send the first configuration information in a system message. Optionally, in embodiments of this application, a system information block 1 (system information block 1, SIB1) may be extended. For example, an information field is set in the SIB1 to carry the first configuration information, or a reserved bit in the SIB1 may be for carrying the first configuration information, or another system information block may be for carrying the first configuration information. This is not limited in this application.

In a possible implementation, the network device may send the first configuration information in an RRC message. According to the implementation, the network device may semi-statically configure the first downlink carrier, the first uplink carrier, and the second uplink carrier for the terminal device.

In a possible implementation, the network device may send the first configuration information in downlink control information (downlink control information, DCI) or a media access control control element (media access control control element, MAC CE). According to the implementation, the network device may dynamically configure the first downlink carrier, the first uplink carrier, and the second uplink carrier for the terminal device.

Step 402: The network device and the terminal device perform data transmission by using at least one of the first downlink carrier, the first uplink carrier, and the second uplink carrier based on the first configuration information.

Specifically, the network device may perform data transmission with the terminal device by using at least one of the first downlink carrier, the first uplink carrier, and the second uplink carrier based on the first configuration information, and the terminal device may perform data transmission with the network device by using at least one of the first downlink carrier, the first uplink carrier, and the second uplink carrier based on the first configuration information.

In a possible implementation, the network device and the terminal device may perform data transmission by using at least one of the first downlink carrier and the first uplink carrier within the first time unit based on the first configuration information and a capability of the terminal device.

When the terminal device supports receiving data on the first downlink carrier while sending data on the second uplink carrier (in other words, supports full duplex), the terminal device may receive, on the first downlink carrier, data sent by the network device while sending data to the network device on the second uplink carrier within the first time unit. Correspondingly, the network device may send data to the terminal device on the first downlink carrier while receiving, on the second uplink carrier, data sent by the terminal device within the first time unit.

For example, at a first moment within the first time unit, the terminal device receives, on the first downlink carrier, data sent by the network device while sending data to the network device on the second uplink carrier.

It may be understood that depending on whether the network device needs to send downlink data to the terminal device and whether the terminal device needs to send uplink data to the network device, at another moment within a first time period, the terminal device may only receive, on the first downlink carrier, data sent by the network device, or only send data to the network device on the second uplink carrier.

When the terminal device does not support receiving data on the first downlink carrier while sending data on the second uplink carrier (in other words, support half duplex), within the first time unit, the terminal device may receive, on the first downlink carrier, data sent by the network device, or send data to the network device on the second uplink carrier. Correspondingly, within the first time unit, the network device may send data to the terminal device on the first downlink carrier, or receive, on the second uplink carrier, data sent by the terminal device.

For example, depending on whether the network device needs to send downlink data to the terminal device and whether the terminal device needs to send uplink data to the network device, the terminal device receives, on the first downlink carrier at the first moment within the first time unit, data sent by the network device, and sends data to the network device on the second uplink carrier at a second moment within the first time unit.

In a possible implementation, the network device and the terminal device may perform data transmission by using at least one of the first uplink carrier and the second uplink carrier within the second time unit based on the first configuration information and the capability of the terminal device.

When the terminal device supports sending data on both the first uplink carrier and the second uplink carrier, the terminal device may send data to the network device on both the first uplink carrier and the second uplink carrier within the second time unit. Correspondingly, within the second time period, the network device may receive, on the first uplink carrier and the second uplink carrier, data sent by the terminal device.

For example, at a first moment within the second time unit, the terminal device sends data to the network device on both the first uplink carrier and the second uplink carrier.

It may be understood that depending on whether the terminal device needs to send uplink data to the network device, or based on a size of data that needs to be sent, or based on scheduling of the network device, at another moment within the first time unit, the terminal device may send data to the network device only on the first uplink carrier, or send data to the network device only on the second uplink carrier.

Optionally, the terminal device may perform data transmission by using the first uplink carrier and the second uplink carrier in a manner of carrier aggregation (carrier aggregation, CA). It may be understood that for the terminal device, the first band supports intra-band CA, and the first uplink carrier and the second uplink carrier are two component carriers (component carrier, CC) of the intra-band carrier aggregation.

When the terminal device does not support sending data to the network device on both the first uplink carrier and the second uplink carrier, the terminal device may send data to the network device on the first uplink carrier or send data to the network device on the second uplink carrier within the second time unit. Correspondingly, within the second time unit, the network device may receive data sent by the terminal device on the first uplink carrier, or receive, on the second uplink carrier, data sent by the terminal device.

For example, the terminal device sends data to the network device on the first uplink carrier at the first moment within the second time unit, and sends data to the network device on the second uplink carrier at a second moment within the second time unit.

Optionally, the terminal device may perform data transmission by using the first uplink carrier and the second uplink carrier in a manner of supplement uplink (supplement uplink, SUL). The first uplink carrier is a new radio uplink (new radio uplink, NUL) carrier, and the second uplink carrier is a SUL carrier. The SUL is an existing technology of uplink enhancement. Specifically, the terminal device supports both one TDD carrier and one SUL carrier. Different from a conventional technology in which a SUL carrier and a TDD carrier are located within two different bands (frequencies of the two bands differ greatly, where for example, the TDD carrier is located at 3.5 GHz, and the SUL carrier is located at 1.8 GHz), in embodiments of this application, the first uplink carrier and the second uplink carrier are located within a same band. Therefore, when spectrum resources are limited, uplink coverage performance and downlink coverage performance of the terminal device are improved as much as possible, and an uplink transmission rate and a downlink transmission rate of the terminal device are increased.

The network device in embodiments of this application may support full duplex. For a plurality of terminal devices, downlink sending is performed on the first downlink carrier while receiving is performed on the first uplink carrier within the first time unit, or uplink sending may be performed on both the first uplink carrier and the second uplink carrier within the second time unit. For example, a plurality of accessing terminal devices usually exist in a cell and perform data transmission with a network device. An example in which the plurality of terminal devices include a first terminal device and a second terminal device is used. Within the first time unit (for example, in one or more slots or one or more symbols within the first time unit), the network device may send data to the first terminal device on the first downlink carrier, and receive, on the first uplink carrier, data sent by the second terminal device. With the second time unit (for example, in one or more slots or one or more symbols within the second time unit), the network device may receive, on the first uplink carrier, data sent by the first terminal device, and receive, on the second uplink carrier, data sent by the second terminal device.

In a possible implementation, the network device may further send indication information to the terminal device, where the indication information indicates the terminal device to send data on the first uplink carrier within the second time unit, or to send data on the second uplink carrier within the second time unit, or to send data on both the first uplink carrier and the second uplink carrier within the second time unit.

Optionally, the indication information may be sent in one or more of signaling such as a system message, an RRC message, a MAC CE, or DCI.

In a possible implementation, the terminal device may send capability information of the terminal device to the network device, where the capability information of the terminal device may include first terminal capability information or second terminal capability information, or may include both the first terminal capability information and the second terminal capability information. The first terminal capability information indicates that the terminal device supports receiving data on the first downlink carrier while sending data on the second uplink carrier, or indicates that the terminal device does not support receiving data on the first downlink carrier while sending data on the second uplink carrier, and the second terminal capability information indicates that the terminal device supports sending data on both the first uplink carrier and the second uplink carrier, or indicates that the terminal device does not support sending data on both the first uplink carrier and the second uplink carrier.

Correspondingly, the network device may schedule, based on the capability information of the terminal device, the terminal device to perform data transmission on at least one of the first downlink carrier, the first uplink carrier, and the second uplink carrier. For example, the network device may send the indication information to the terminal device based on the capability information of the terminal device, to indicate the terminal device to send data on the first uplink carrier within the second time unit, or send data on the second uplink carrier within the second time unit, or send data on both the first uplink carrier and the second uplink carrier within the second time unit.

Based on the foregoing procedure shown in FIG. 4, in a possible implementation, when the terminal device performs data transmission by using the first uplink carrier and the second uplink carrier, the terminal device uses same uplink power control parameters on the first uplink carrier and the second uplink carrier. In other words, the network device configures a set of uplink power control parameters for the terminal device, where the set of uplink power control parameters may be applied to the first uplink carrier and the second uplink carrier. Because the first uplink carrier and the second uplink carrier are located within a same band, and frequencies of the two uplink carriers are close, link quality of the two uplink carriers is relatively similar, so that the same uplink power control parameters may be used. In the foregoing implementation, different uplink power control parameters do not need to be configured for data transmission of the two uplink carriers, thereby reducing signaling overheads, and simplifying technical implementation of the terminal device and the network device.

Based on the foregoing procedure shown in FIG. 4, in a possible implementation, when the network device sends the first configuration information in the system message, the terminal device may initiate, when performing initial access based on the system message, random access by using one of the first uplink carrier and the second uplink carrier that are indicated by the first configuration information in the system message. In other words, when the terminal device performs initial access, the first uplink carrier and the second uplink carrier that are indicated by the first configuration information take effect for the terminal device, and the terminal device may use one of the uplink carriers to initiate random access.

In a possible implementation, when the network device configures the first uplink carrier and the second uplink carrier for the terminal device in the system message, the terminal device selects one of the first uplink carrier and the second uplink carrier based on measurement of a downlink signal during an initial access phase. For example, during the initial access phase, the terminal device may measure a downlink reference signal such as a synchronization signal block (synchronization signal block, SSB) or a channel state information-reference signal (channel state information-reference signal, CSI-RS), to obtain a received power (reference signal received power, RSRP) of the downlink reference signal. When the RSRP is low, for example, less than a specified RSRP threshold, the terminal device selects the second uplink carrier to initiate random access. When the RSRP is high, for example, greater than or equal to a specified RSRP threshold, the terminal device selects the first uplink carrier to initiate random access. According to this implementation, the base station may be enabled to manage and use resources of the two uplink carriers more flexibly based on coverage of the terminal device in the cell.

In another possible implementation, when the network device semi-statically configures the first uplink carrier and the second uplink carrier for the terminal device in the system message, the terminal device does not need to select one of the first uplink carrier and the second uplink carrier based on measurement of a downlink signal during an initial access phase; instead, the terminal device randomly selects or arbitrarily selects one uplink carrier from the first uplink carrier and the second uplink carrier to initiate random access. Because the first uplink carrier and the second uplink carrier are located within a same band, and frequencies of the first uplink carrier and the second uplink carrier are close, link quality of the two uplink carriers is similar, and similar performance can be achieved when the terminal device initiates random access using either of the two uplink carriers. According to this implementation, the terminal device may not necessarily measure an uplink signal, and therefore, implementation complexity can be reduced.

Based on the foregoing procedure shown in FIG. 4, in a possible implementation, when the network device sends the first configuration information in higher-layer signaling such as RRC to semi-statically configure the first uplink carrier and the second uplink carrier for the terminal device, after the terminal device receives the RRC message or the higher-layer signaling in an RRC connected state, the terminal device performs data transmission with the network device based on at least one of the first uplink carrier and the second uplink carrier that are configured by using the RRC message or the higher-layer signaling. In this case, the first uplink carrier and the second uplink carrier that are configured by using the first configuration information take effect for the terminal device when the terminal device is in the RRC connected state.

Based on the foregoing method shown in FIG. 4, in a possible implementation, the network device may further send TDD uplink and downlink configuration information to the terminal device. The TDD uplink and downlink configuration information indicates time unit formats of a plurality of time units within a period of time, the time unit formats include a first time unit format and a second time unit format, the first time unit format supports both downlink data transmission and uplink data transmission, and the second time unit format supports only uplink data transmission. A format of the first time unit in embodiments of this application is the first time unit format, and a format of the second time unit in embodiments of this application is the second time unit format.

In a possible implementation, the TDD uplink and downlink configuration information may include one or two patterns, a reference subcarrier spacing, and the like. Each pattern information includes parameters such as an uplink and downlink transmission period, a quantity of downlink time units, and a quantity of uplink time units.

Optionally, the time unit may be a slot (slot), a symbol, or a subframe.

It may be understood that the network device and the terminal device may determine a downlink transmission occasion and an uplink transmission occasion of the first frequency domain resource based on the first configuration information and the TDD uplink and downlink configuration information. The downlink transmission occasion includes the first time unit, and the uplink transmission occasion includes the second time unit. In other words, the first time unit within which downlink transmission is performed by using the first downlink carrier and the second time unit within which uplink transmission is performed by using the second uplink carrier may be determined.

It may be understood that the TDD uplink and downlink configuration information is associated with the first downlink carrier and the first uplink carrier. In this case, it may be considered that the TDD uplink and downlink configuration information is for determining the first time unit within which downlink transmission is performed by using the first downlink carrier, and the second time unit within which uplink transmission is performed by using the second uplink carrier.

In another manner of understanding, the network device and the terminal device may determine, based on the first configuration information and the TDD uplink and downlink configuration information, an occasion that supports both downlink transmission and uplink transmission and that is within the first band and an occasion that supports only uplink transmission and that is within the first band. The occasion that supports both downlink transmission and uplink transmission includes the first time unit, and the occasion that supports only uplink transmission includes the second time unit. In other words, the first time unit within which downlink transmission is performed by using the first downlink carrier and/or uplink transmission is performed by using the second uplink carrier, and the second time unit within which uplink transmission is performed by using the first uplink carrier and/or the second uplink carrier may be determined. It may be considered that the TDD uplink and downlink configuration information is cell-level and is associated with all the three carriers. The TDD uplink and downlink configuration information is for determining the first time unit within which downlink transmission is performed by using the first downlink carrier and/or uplink transmission is performed by using the second uplink carrier, and the second time unit within which uplink transmission is performed by using the first uplink carrier and/or the second uplink carrier.

In the foregoing embodiments of this application, the first downlink carrier, the first uplink carrier, and the second uplink carrier are configured within the first band. The first downlink carrier and the first uplink carrier are used in TDD mode, and the first downlink carrier and the second uplink carrier are used in FDD mode, so that the first band has both the TDD and FDD duplex modes. In this way, because uplink carriers may be configured on both the first frequency domain resource and the second frequency domain resource within the first band in embodiments of this application, uplink coverage may be improved, an uplink transmission delay may be reduced, and an uplink capacity may be increased, compared with those in a current TDD system. In addition, because the first downlink carrier and the first uplink carrier may be configured on the first frequency domain resource within the first band in embodiments of this application, and downlink data transmission and uplink data transmission are supported on the first frequency domain resource, in other words, uplink and downlink transmission may be performed in TDD mode at a same frequency, reciprocity between an uplink channel and a downlink channel may be improved, and downlink transmission performance may be improved, compared with those in an FDD system.

The first downlink carrier, the first uplink carrier, and the second uplink carrier in embodiments of this application are configured within one band, and a signal power within one carrier has little or no impact on a neighboring carrier. Therefore, performance of uplink transmission or downlink transmission is ensured.

An embodiment of this application further provides a network device. A radio frequency link structure of the network device may support the method provided in the foregoing embodiment of this application.

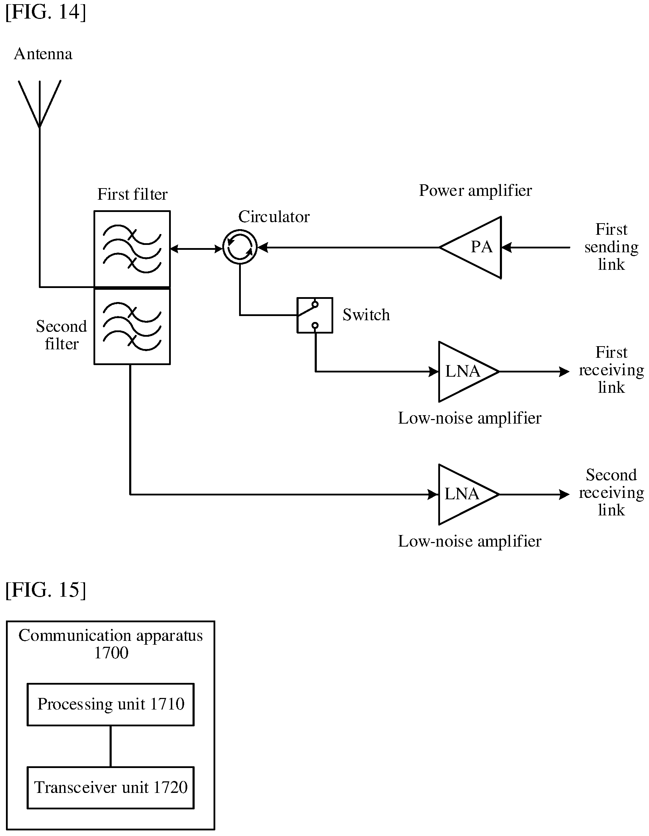

FIG. 14 is a diagram of a structure of a radio frequency link of a network device according to an embodiment of this application. As shown in FIG. 14, the radio frequency link of the network device includes a first sending link, a first receiving link, and a second receiving link. The first sending link and the first receiving link share a first filter, the second receiving link uses a second filter, and the first filter and the second filter are multiplexed to a same antenna or antenna panel. The first sending link and the first receiving link are connected to the first filter through a circulator, the first receiving link is selectively connected to the circulator through a switch, and the first filter and the second filter share a same antenna or antenna panel. A function of the circulator is to isolate received and sent signals, and a function of the switch is to connect or disconnect a link.

The first sending link amplifies power of the sent signal by using a power amplifier (power amplifier, PA), and the first receiving link and the second receiving link amplify power of the received signal by using a low-noise amplifier (low-noise amplifier, LNA).

The first sending link is configured to send a first downlink carrier, the first receiving link may receive a first uplink carrier, and the second receiving link may receive a second uplink carrier.

Within a first time unit, the switch disconnects the first receiving link from the circulator, the network device sends a signal to a terminal device by using the first sending link, and the network device may alternatively receive, by using the second receiving link, a signal sent by the terminal device.

Within a second time unit, the switch connects the first receiving link with the circulator, and the network device receives, by using the first receiving link, the signal sent by the terminal device. In addition, the network device may alternatively receive, by using the second receiving link, the signal sent by the terminal device.

The radio frequency link structure of the network device shown in FIG. 14 enables the network device to use the same antenna, in other words, the antenna panel supports both TDD and FDD duplex modes within a band.

It may be understood that to implement the functions in the foregoing embodiments, the network device and the terminal device include corresponding hardware structures and/or software modules for performing the functions. A person skilled in the art should easily be aware that the units and method steps in the examples described with reference to embodiments disclosed in this application can be implemented in a form of hardware or a combination of hardware and computer software in this application. Whether a function is performed by hardware or computer software driving hardware depends on a particular application scenario and a design constraint of the technical solutions.

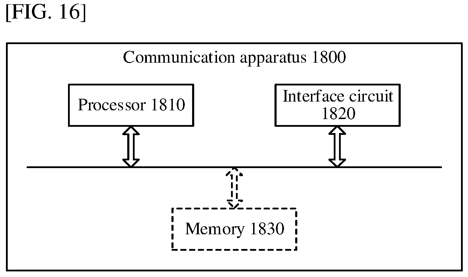

FIG. 15 and FIG. 16 are diagrams of structures of possible communication apparatuses according to an embodiment of this application. The communication apparatuses may be configured to implement functions of the network device or the terminal device in the foregoing method embodiments, and therefore can also implement beneficial effects of the foregoing method embodiments. In this embodiment of this application, the communication apparatus may be the access network device 110a or the access network device 110b shown in FIG. 3, or may be a terminal (120a to 120j) shown in FIG. 3, or may be a module (such as a chip) used in a network device or a terminal device.

As shown in FIG. 15, the communication apparatus 1700 includes a processing unit 1710 and a transceiver unit 1720. The communication apparatus 1700 is configured to implement a function of the network device or the terminal device in the method embodiment shown in FIG. 4.

For example, when the communication apparatus 1700 is configured to implement the function of the network device in the method embodiment shown in FIG. 4, the transceiver unit 1720 is configured to send first configuration information, where the first configuration information indicates a first downlink carrier, a first uplink carrier, and a second uplink carrier, the first downlink carrier is for downlink data transmission, the first uplink carrier and the second uplink carrier are for uplink data transmission, the first downlink carrier and the first uplink carrier are respectively for downlink data transmission and uplink data transmission in TDD mode, and the first downlink carrier, the first uplink carrier, and the second uplink carrier are located within a first band; and the processing unit 1710 is configured to perform data transmission with a terminal device by using at least one of the first downlink carrier, the first uplink carrier, and the second uplink carrier based on the first configuration information.

For another example, when the communication apparatus 1700 is configured to implement a function of the terminal device in the method embodiment shown in FIG. 4, the transceiver unit 1720 is configured to receive first configuration information, where the first configuration information indicates a first downlink carrier, a first uplink carrier, and a second uplink carrier, the first downlink carrier is for downlink data transmission, the first uplink carrier and the second uplink carrier are for uplink data transmission, the first downlink carrier and the first uplink carrier are respectively for downlink data transmission and uplink data transmission in TDD mode, and the first downlink carrier, the first uplink carrier, and the second uplink carrier are located within a first band; and the processing unit 1710 is configured to perform data transmission with a network device by using at least one of the first downlink carrier, the first uplink carrier, and the second uplink carrier based on the first configuration information.

For more detailed descriptions of the processing unit 1710 and the transceiver unit 1720, directly refer to related descriptions of the method embodiment shown in FIG. 4. Details are not described herein.

As shown in FIG. 16, a communication apparatus 1800 includes a processor 1810 and an interface circuit 1820. The processor 1810 and the interface circuit 1820 are coupled to each other. It may be understood that the interface circuit 1820 may be a transceiver or an input/output interface. Optionally, the communication apparatus 1800 may further include a memory 1830 configured to store instructions executed by the processor 1810, or store input data required for the processor 1810 to run the instructions, or store data generated after the processor 1810 runs the instructions.

When the communication apparatus 1800 is configured to implement the method shown in FIG. 4, the processor 1810 is configured to implement the function of the foregoing processing unit 1710, and the interface circuit 1820 is configured to implement the function of the foregoing transceiver unit 1720.

When the communication apparatus is a chip used in the terminal device, the chip implements the functions of the terminal device in the foregoing method embodiments. The chip receives information from another module in the terminal device, or the chip sends information to another module in the terminal device.

When the communication apparatus is a module used in a network device, the module in the network device implements a function of the network device in the foregoing method embodiments. The module in the network device receives information from another module in the network device, or the module in the network device sends information to another module. The module in the network device herein may be a baseband chip of the network device, or may be a DU or another module. The DU herein may be a DU under an open radio access network (open radio access network, O-RAN) architecture.

It may be understood that the processor in this embodiment of this application may be a central processing unit (Central Processing Unit, CPU), or may be another general purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a transistor logic device, a hardware component, or any combination thereof. The general purpose processor may be a microprocessor, or may be any conventional processor.

This application provides another example of a communication apparatus. The communication apparatus includes at least one processor and at least one memory. The at least one processor is coupled to the at least one memory. The at least one memory is configured to store instructions. When the instructions are executed by the at least one processor, the communication apparatus is caused to perform the method in the foregoing embodiments. An example in which the communication apparatus includes one processor and one memory is used. As shown in FIG. 16, the communication apparatus 1800 includes one processor 1810 and one memory 1830. The processor 1810 is coupled to the memory 1830. The memory 1830 stores instructions. When the instructions stored in the memory 1830 are executed by the processor 1810, the communication apparatus 1800 performs the method performed by the terminal device or the network device in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. An example storage medium is coupled to a processor, so that the processor can read information from the storage medium and write information into the storage medium. The storage medium may alternatively be a component of the processor. The processor and the storage medium may be located in an ASIC. In addition, the ASIC may be located in the network device or the terminal. The processor and the storage medium may alternatively exist in a network device or a terminal as discrete components.

All or some of the foregoing embodiments may be implemented by using software, hardware, firmware, or any combination thereof. During implementation through software, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device such as a server or a data center that integrates one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, "at least one" refers to one or more, and "a plurality of" refers to two or more. The term "and/or" is used to describe an association relationship between associated objects, and indicates that three relationships may exist. For example, "A and/or B" may represent the following cases: only A exists, both A and B exist, and only B exists, where A and B may be singular or plural. In the text descriptions of this application, the character "/" represents an "or" relationship between the associated objects. In an equation in this application, the character "/" represents a "division" relationship between the associated objects. The phrase "including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

## Claims

1. A communication method, comprising:
sending first configuration information, wherein the first configuration information indicates a first downlink carrier, a first uplink carrier, and a second uplink carrier, the first downlink carrier is for downlink data transmission, the first uplink carrier and the second uplink carrier are for uplink data transmission, the first downlink carrier and the first uplink carrier are respectively for downlink data transmission and uplink data transmission in time division duplex TDD mode, and the first downlink carrier, the first uplink carrier, and the second uplink carrier are located within a first band; and
performing data transmission with a terminal device by using at least one of the first downlink carrier, the first uplink carrier, and the second uplink carrier based on the first configuration information.

2. The method according to claim 1, wherein the first band comprises a first frequency domain resource and a second frequency domain resource, the first frequency domain resource is for uplink transmission and downlink transmission in TDD mode, the second frequency domain resource is only for uplink transmission, the first downlink carrier and the first uplink carrier are located within the first frequency domain resource, and the second uplink carrier is located within the second frequency domain resource.

3. The method according to claim 2, wherein the first frequency domain resource and the second frequency domain resource are non-contiguous.

4. The method according to any one of claims 1 to 3, wherein a first guard band exists between the first downlink carrier and the second uplink carrier, and the first guard band is not for data transmission; or
a first guard band exists between the first downlink carrier and the second uplink carrier, a second guard band exists between the first uplink carrier and the second uplink carrier, and the first guard band and the second guard band are not for data transmission.

5. The method according to any one of claims 1 to 4, wherein the performing data transmission with the terminal device by using at least one of the first downlink carrier, the first uplink carrier, and the second uplink carrier based on the first configuration information comprises:
sending data to the terminal device on the first downlink carrier within a first time unit; or
receiving, on the second uplink carrier within the first time unit, data sent by the terminal device; or
within the first time unit, sending data to the terminal device on the first downlink carrier while receiving, on the second uplink carrier, data sent by the terminal device.

6. The method according to any one of claims 1 to 4, wherein the performing data transmission with the terminal device by using at least one of the first downlink carrier, the first uplink carrier, and the second uplink carrier based on the first configuration information comprises:
receiving, on the first uplink carrier within the second time unit, data sent by the terminal device; or
receiving, on the second uplink carrier within the second time unit, data sent by the terminal device; or
receiving, on both the first uplink carrier and the second uplink carrier within the second time unit, data sent by the terminal device.

7. The method according to claim 5 or 6, wherein the method further comprises:
sending TDD uplink and downlink configuration information, wherein the TDD uplink and downlink configuration information indicates time unit formats of a plurality of time units within a period of time, the time unit formats comprise a first time unit format and a second time unit format, the first time unit format supports both downlink data transmission and uplink data transmission, and the second time unit format supports only uplink data transmission, wherein
a format of the first time unit is the first time unit format, and a format of the second time unit is the second time unit format.

8. The method according to any one of claims 1 to 7, wherein the method further comprises:
sending indication information, wherein the indication information indicates the terminal device to send data on the first uplink carrier within the second time unit, or to send data on the second uplink carrier within the second time unit, or to send data on both the first uplink carrier and the second uplink carrier within the second time unit.

9. The method according to any one of claims 1 to 8, wherein the method further comprises:
receiving capability information from the terminal device, wherein the capability information comprises first terminal capability information and/or second terminal capability information; the first terminal capability information indicates that the terminal device supports receiving data on the first downlink carrier while sending data on the second uplink carrier, or indicates that the terminal device does not support receiving data on the first downlink carrier while sending data on the second uplink carrier; and the second terminal capability information indicates that the terminal device supports sending data on both the first uplink carrier and the second uplink carrier, or indicates that the terminal device does not support sending data on both the first uplink carrier and the second uplink carrier; and
the performing data transmission with the terminal device by using at least one of the first downlink carrier, the first uplink carrier, and the second uplink carrier based on the first configuration information comprises:
performing data transmission with the terminal device by using at least one of the first downlink carrier, the first uplink carrier, and the second uplink carrier based on the first configuration information and the capability information of the terminal device.

10. The method according to any one of claims 1 to 9, wherein the first configuration information is sent via one or more of the following signaling: a system message, a radio resource control RRC message, a media access control control element MAC CE, and downlink control information DCI.

11. A communication method, comprising:
receiving first configuration information, wherein the first configuration information indicates a first downlink carrier, a first uplink carrier, and a second uplink carrier, the first downlink carrier is for downlink data transmission, the first uplink carrier and the second uplink carrier are for uplink data transmission, the first downlink carrier and the first uplink carrier are respectively for downlink data transmission and uplink data transmission in time division duplex TDD mode, and the first downlink carrier, the first uplink carrier, and the second uplink carrier are located within a first band; and
performing data transmission with a network device by using at least one of the first downlink carrier, the first uplink carrier, and the second uplink carrier based on the first configuration information.

12. The method according to claim 11, wherein the first band comprises a first frequency domain resource and a second frequency domain resource, the first frequency domain resource is for uplink transmission and downlink transmission in time division duplex TDD mode, the second frequency domain resource is only for uplink transmission, the first downlink carrier and the first uplink carrier are located within the first frequency domain resource, and the second uplink carrier is located within the second frequency domain resource.

13. The method according to claim 12, wherein the first frequency domain resource and the second frequency domain resource are non-contiguous.

14. The method according to any one of claims 11 to 13, wherein a first guard band exists between the first downlink carrier and the second uplink carrier, and the first guard band is not for data transmission; or
a first guard band exists between the first downlink carrier and the second uplink carrier, a second guard band exists between the first uplink carrier and the second uplink carrier, and the first guard band and the second guard band are not for data transmission.

15. The method according to any one of claims 11 to 14, wherein the performing data transmission with the network device by using at least one of the first downlink carrier, the first uplink carrier, and the second uplink carrier based on the first configuration information comprises:
receiving, on the first downlink carrier within a first time unit, data sent by the network device; or
sending data to the network device on the second uplink carrier within the first time unit; or
within the first time unit, receiving, on the first downlink carrier, data sent by the network device, while sending data to the network device on the second uplink carrier.

16. The method according to any one of claims 11 to 15, wherein the performing data transmission with the network device by using at least one of the first downlink carrier, the first uplink carrier, and the second uplink carrier based on the first configuration information comprises:
sending data to the network device on the first uplink carrier within a second time unit; or
sending data to the network device on the second uplink carrier within the second time unit; or
sending data to the network device on both the first uplink carrier and the second uplink carrier within the second time unit.

17. The method according to claim 15 or 16, wherein the method further comprises:
receiving TDD uplink and downlink configuration information, wherein the TDD uplink and downlink configuration information indicates time unit formats of a plurality of time units within a period of time, the time unit formats comprise a first time unit format and a second time unit format, the first time unit format supports both downlink data transmission and uplink data transmission, and the second time unit format supports only uplink data transmission, wherein
a format of the first time unit is the first time unit format, and a format of the second time unit is the second time unit format.

18. The method according to any one of claims 11 to 17, wherein the method further comprises:
receiving indication information from the network device, wherein the indication information indicates a terminal device to send data on the first uplink carrier within the second time unit, or to send data on the second uplink carrier within the second time unit, or to send data on both the first uplink carrier and the second uplink carrier within the second time unit.

19. The method according to any one of claims 11 to 18, wherein the method further comprises:
sending capability information of the terminal device to the network device, wherein the capability information comprises first terminal capability information and/or second terminal capability information; the first terminal capability information indicates that the terminal device supports receiving data on the first downlink carrier while sending data on the second uplink carrier, or indicates that the terminal device does not support receiving data on the first downlink carrier while sending data on the second uplink carrier; and the second terminal capability information indicates that the terminal device supports sending data on both the first uplink carrier and the second uplink carrier, or indicates that the terminal device does not support sending data on both the first uplink carrier and the second uplink carrier.

20. The method according to any one of claims 11 to 19, wherein the first configuration information is received in one or more of the following signaling: a system message, a radio resource control RRC message, a media access control control element MAC CE, and downlink control information DCI.

21. A communication apparatus, comprising a unit or a module configured to perform the method according to any one of claims 1 to 10, or comprising a unit or a module configured to perform the method according to any one of claims 11 to 20.

22. A communication apparatus, comprising one or more processors configured to perform the method according to any one of claims 1 to 10 or the method according to any one of claims 11 to 20.

23. A readable storage medium, wherein readable storage medium stores a program; and when the program is executed by a communication apparatus, the method according to any one of claims 1 to 10 or the method according to any one of claims 11 to 20 is implemented.

24. A chip system, comprising a memory, configured to store a computer program; and a processor, wherein after the processor invokes the computer program from the memory and runs the computer program, a communication apparatus installed with the chip system is caused to perform the method according to any one of claims 1 to 10 or the method according to any one of claims 11 to 20.

25. A computer program product, wherein when the computer program product is invoked by a computer, the computer is caused to perform the method according to any one of claims 1 to 10 or the method according to any one of claims 11 to 20.
